# FASCICULE DE BREVET EUROPEEN

(11) **EP 3 339 398 B1**
(45) Date de publication et mention de la délivrance du brevet: **30.01.2019**
(21) Numéro de dépôt: 17205119.5
(22) Date de dépôt: 04.12.2017
(51) Int. Cl.: C10G 3/00, C10G 1/00, B01J 3/04, B01J 19/18, C10G 1/06, F04B 3/00, F04B 7/04

(54) **DISPOSITIF DE LIQUEFACTION HYDROTHERMALE**
VORRICHTUNG ZUR HYDROTHERMALEN VERFLÜSSIGUNG
HYDROTHERMAL LIQUEFACTION DEVICE

(30) Priorité: 22.12.2016 FR 1663124
(43) Date de publication de la demande: 27.06.2018
(73) Titulaire: Commissariat à l'Energie Atomique et aux Energies Alternatives, 75015 Paris (FR)
(72) Inventeur: ROUBAUD, Anne, 38690 CHABONS (FR); ROUSSELY, Julien, 38250 LANS EN VERCOS (FR)
(74) Mandataire: Cabinet Laurent & Charras

(56) Documents cités:
- WO-A1-2012/126939
- WO-A1-2016/097414

## Description

### DOMAINE DE L'INVENTION

La présente invention concerne un dispositif de liquéfaction hydrothermale de la biomasse. La configuration de ce dispositif permet d'optimiser la mise en condition de liquéfaction hydrothermale de la biomasse en combinant un moyen de chauffe et un moyen de mise sous pression.

Le domaine d'utilisation de la présente invention concerne la valorisation de la biomasse, notamment pour former des molécules organiques d'intérêt, par exemple des précurseurs d'hydrocarbures.

### ETAT ANTERIEUR DE LA TECHNIQUE

La valorisation de matières organiques présente un intérêt particulier, notamment au regard de l'accumulation de déchets organiques, du coût ou de la raréfaction des ressources énergétiques d'origine minérale, ou pour des raisons environnementales.

De nombreux acteurs ont développé divers procédés permettant de valoriser des résidus organiques issus de l'industrie agro-alimentaire, du milieu agricole, de l'industrie papetière, des boues de station d'épuration, des micro-algues ou des macro-algues.

Ces résidus, également appelés bio-ressources ou biomasse, comprennent généralement une quantité importante d'eau. C'est la raison pour laquelle, ils sont particulièrement adaptés pour être traités par des procédés hydrothermaux mettant à profit les propriétés de l'eau dans des conditions sous-critiques ou supercritiques, le point critique de l'eau correspondant à de l'eau à 374°C sous une pression de 22,1 MPa.

Par exemple, dans des conditions de température et de pression inférieures à 374°C et 22,1 MPa, l'eau est à la fois le solvant de réaction et un réactif, il est possible de former, à partir de matière organique, un biocrude combustible (sorte de pétrole vert) et des molécules d'intérêt pour la synthèse chimique.

Cependant, lorsque la température de réaction est inférieure à 250°C, des réactions secondaires entrainent la formation de bio-char (charbon), par un procédé dit de carbonisation hydrothermale.

Ainsi, dans les procédés de traitement de la biomasse, il est important de ne pas laisser cette dernière à une température de l'ordre de 200°C pendant une période de temps trop prolongée.

Cependant, les procédés de l'art antérieur nécessitent un temps de chauffe relativement long avant d'initier la valorisation de la biomasse, notamment par liquéfaction hydrothermale.

Une solution consiste à injecter la biomasse, préalablement mise sous pression à froid, dans un réacteur préchauffé. Cependant, ce type de dispositif nécessite une zone de transition, avec de manière générale, des problèmes de sédimentation, et donc d'obstruction, dans les canalisations ou dans le corps de la pompe d'injection lorsque la biomasse comprend des particules ou présente une viscosité importante.

WO2016/097414 divulgue un dispositif de liquéfaction hydrothermale de la biomasse algale comprenant un réacteur tubulaire avec une enveloppe interne délimitant une chambre dans laquelle la réaction de liquéfaction hydrothermale a lieu et une espace entre l'enveloppe interne et celle externe délimitant la chambre d'un réacteur dans laquelle a lieu une réaction d'oxydation par voie humide. L'énergie libérée par la réaction exothermique d'oxydation peut être valorisée en l'apportant comme source de chaleur à la réaction endothermique de liquéfaction hydrothermale.

La présente invention permet de remédier aux problèmes de l'art antérieur en termes de réactions secondaires lors du chauffage de la biomasse, ou de sédimentation dans les canalisations ou dans la pompe d'injection.

### EXPOSE DE L'INVENTION

La présente invention concerne un dispositif permettant de valoriser la biomasse dans le but de produire une phase organique appelée « biocrude » à partir de résidus agroalimentaires ; de biocarburants à partir de micro-algues ; de molécules d'intérêt, par exemple des phénols et des polyphénols, à partir de liqueur noire ou de lignine ; ou de bitume « vert ».

Le Demandeur a mis au point un dispositif permettant de :
- limiter la durée de séjour de la composition de biomasse dans une zone ayant une température inférieure à 250°C,
- limiter les distances de transfert de la composition de biomasse avant son entrée dans le réacteur de liquéfaction hydrothermale, et ainsi limiter les phénomènes de sédimentation, d'accumulation et de bouchages dans les circuits d'alimentation,
- sortir rapidement, à chaud, les produits résultant de la liquéfaction hydrothermale de la biomasse,
- limiter les phénomènes de bouchage lors de l'évacuation des produits.

Ce dispositif permet de résoudre ces problèmes grâce à la présence d'une zone de chauffe et de compression. Ainsi, contrairement aux dispositifs de l'art antérieur, il ne s'agit pas d'un réacteur de type autoclave, dans lequel la biomasse arrive après avoir été chauffée à au moins 200°C.

Ce dispositif intègre les fonctions de compression et de chauffe permettant le traitement de compositions hétérogènes et la mise en condition de réaction (température + pression) rapide.

Plus précisément, la présente invention concerne un dispositif de liquéfaction hydrothermale d'une composition à base de biomasse, comprenant :
- une enceinte définissant un volume V^{E}, comprenant trois zones successives Z1, Z2 et Z3 :
   la zone Z1 étant munie d'une entrée E^{Z1} d'une composition à base de biomasse, et étant à une température T^{Z1} et à une pression P^{Z1},
   la zone Z2 correspondant à une zone de réaction par liquéfaction hydrothermale de la biomasse à une température T^{Z2} et à une pression P^{Z2},
   la zone Z3 étant munie d'une sortie S^{Z3} des produits issus de la réaction par liquéfaction hydrothermale de la biomasse, et étant à une température T^{Z3} et à une pression P⁷³,
- deux pistons P1 et P2, coulissant indépendamment l'un de l'autre entre les zones Z1, Z2 et Z3 de manière à amener la composition à base de biomasse de la zone Z1 vers la zone Z3, les pistons P1 et P2 étant susceptibles d'être espacés l'un de l'autre de manière à définir un volume V^{P} variable et inférieur à V^{E},
- un moyen de chauffe externe de la zone Z2,
- des moyens d'activation des pistons P1 et P2 permettant de faire varier le volume V^{P}.

Ainsi, ce dispositif comprend une enceinte ayant trois zones consécutives, Z1, puis Z2, puis Z3, ayant chacune, indépendamment l'une de l'autre, sa température et sa pression.

Le volume V^{E} de l'enceinte est avantageusement compris entre 50 et 150 cm³, plus avantageusement entre 67 et 90 cm³.

L'enceinte est avantageusement de forme cylindrique, plus avantageusement un cylindre circulaire droit.

Aussi, l'enceinte présente une longueur avantageusement comprise entre 60 et 210 cm, plus avantageusement entre 90 et 180 cm.

Dans le cas d'un cylindre circulaire droit, elle présente un diamètre avantageusement compris entre 1 et 3 cm, plus avantageusement entre 1,5 et 2,5 cm.

L'enceinte présente une épaisseur compatible avec les conditions de fonctionnement (pression et température), avantageusement entre 1 et 3 cm.

En outre, l'enceinte et les pistons peuvent être réalisés en un matériau tel que l'acier inoxydable austénitique.

De manière avantageuse, les zones Z1, Z2 et Z3 présentent un volume identique, correspondant à un tiers du volume V^{E}.

Néanmoins, les zones Z1, Z2 et Z3 peuvent avoir des sections distinctes et/ou des longueurs distinctes. En outre, le dispositif peut présenter différentes épaisseurs sur sa longueur, dans la direction Z1 vers Z3.

Dans l'enceinte, le mouvement des pistons P1 et P2 permet de créer un volume V^{P} défini par l'espacement entre les pistons P1 et P2 dans l'enceinte, le volume V^{P} étant inférieur à V^{E}.

Les pistons P1 et P2 sont indépendants et peuvent ainsi être actionnés séparément, à des vitesses de déplacement distinctes. En effet, ils peuvent se déplacer simultanément, mais pas nécessairement dans la même direction ni sur la même distance.

De manière générale, l'introduction de biomasse écarte les pistons P1 et P2, générant ainsi le volume V^{P} occupé par la biomasse.

Comme déjà indiqué, les pistons permettent de transférer la biomasse entre les zones Z1, Z2 et Z3. Ils sont actionnables indépendamment l'un de l'autre, de manière à pouvoir :
- augmenter le volume V^{P} dans la zone Z1 ou réduire le volume V^{P} dans la zone Z2 et ainsi augmenter la pression de la composition de biomasse dans la zone Z2 ou
- évacuer les produits de liquéfaction hydrothermale dans la zone Z3.

Dans la zone Z1, l'entrée E^{Z1} est avantageusement munie d'une vanne d'alimentation de la composition à base de biomasse. Cette vanne permet de réguler l'entrée de la composition de biomasse.

Dans la zone Z2, le moyen de chauffe externe permet de chauffer la composition de biomasse. Il s'agit généralement d'un moyen de chauffe par conduction thermique de la surface extérieure de l'enceinte au niveau de la zone Z2. Un gradient de température peut être relevé entre l'extérieur et l'intérieur de la zone Z2. Aussi, des capteurs thermiques peuvent être intégrés dans la zone Z2, mais également dans les zones Z1 et/ou Z3.

De manière générale, seule la zone Z2 comprend un ou plusieurs moyens de chauffe, les zones Z1 et Z3 en étant avantageusement dépourvues.

Comme déjà mentionné, l'actionnement des pistons P1 et P2 permet la mise sous pression de la composition de biomasse dans la zone Z2. Les moyens d'actionnement correspondent à tout moyen connu de l'homme du métier, par exemple des vérins hydrauliques.

Selon un mode de réalisation particulier, la zone Z2 peut être divisée en sous-zones ayant différentes températures T^{Z2}, avantageusement deux sous-zones. Ainsi, dans ce cas, le dispositif selon l'invention peut comprendre plusieurs moyens externes de chauffe régulant la température de ces sous-zones. Ce dispositif permet de réaliser un chauffage par pallier de la composition de biomasse.

Dans la zone Z3, la sortie S^{Z3} est avantageusement munie d'une vanne d'évacuation des produits issus de la réaction par liquéfaction hydrothermale de la biomasse. Ces produits sont généralement évacués par actionnement des pistons P1 et P2 de manière à réduire le volume V^{P}.

La présente invention concerne également un procédé de liquéfaction hydrothermale d'une composition à base de biomasse, au moyen de ce dispositif. Ce procédé comprend les étapes suivantes :
- introduction d'une composition à base de biomasse dans la zone Z1, dans le volume V^{P} au moyen de l'entrée E^{Z1},
- actionnement des pistons P1 et P2 de manière à amener la composition à base de biomasse de la zone Z1 vers la zone Z2,
- chauffage de la zone Z2 à une température T^{Z2}, et simultanément,
   dans la zone Z2, compression de la composition à base de biomasse en actionnant le piston P1 et/ou le piston P2, de manière à atteindre une pression P^{Z2},
- liquéfaction hydrothermale de la biomasse dans la zone Z2 à une température T^{Z2} et à une pression P^{Z2},
- actionnement des pistons P1 et P2 de manière à amener la biomasse hydrothermalement liquéfiée dans la zone Z3,
- évacuation de la biomasse hydrothermalement liquéfiée au moyen de la sortie S^{Z3}.

La composition à base de biomasse est avantageusement une composition aqueuse. Elle comprend préférentiellement 30 à 90% en poids d'eau par rapport à son poids total. Aussi, la composition à base de biomasse comprend avantageusement entre 10 et 70% en poids de biomasse, par rapport au poids d'une composition aqueuse à base de biomasse.

Tout type de biomasse peut être traité selon l'invention. Il s'agit généralement de matière organique CHNSO, c'est-à-dire de matière organique à base des éléments carbone, hydrogène, azote, soufre et oxygène.

A titre d'exemple, la biomasse peut être choisie parmi les matières organiques suivantes : bois ; résidus agroalimentaires tels que drêches de cassis, marcs de raisin, et drêches de brasserie ; liqueur noire (résultant de la fabrication de pâte à papier) ; micro-algues ; boues de stations d'épuration ; vinasses ; macro-algues ; et polymères synthétiques.

La biomasse peut présenter une granulométrie inférieure ou égale à 500 micromètres, plus avantageusement inférieure à 200 micromètres. La composition traitée peut donc être hétérogène. Elle peut correspondre à une composition contenant des particules solides.

La composition de biomasse peut également comprendre un catalyseur permettant de favoriser la réaction de liquéfaction hydrothermale. Ce catalyseur peut être homogène. Il peut s'agir de carbonate de sodium ou de soude (NaOH) par exemple.

Comme évoqué précédemment, la composition à base de biomasse est avantageusement une composition aqueuse. Cependant, selon un mode de réalisation particulier, il peut s'agir d'une composition de biomasse dans un alcool avantageusement choisi dans le groupe comprenant l'éthanol, le méthanol, et l'isopropanol, seul ou en mélange. Dans ce cas, l'homme du métier saura adapter les conditions de réaction données ci-après, notamment P^{Z2}, T^{Z2} et le temps de réaction. En effet, un solvant organique permet généralement de travailler à une pression inférieure à celle nécessaire dans le cas d'une composition aqueuse de biomasse.

L'introduction de la composition de biomasse dans la zone Z1 est avantageusement réalisée sous pression positive (pression supérieure à la pression atmosphérique), notamment à l'aide d'une pompe d'injection.

Aussi, la pression P^{Z1} est avantageusement comprise entre 0,1 et 1 MPa, plus avantageusement entre 0,1 et 0,5 MPa.

D'autre part, la température T^{Z1} est avantageusement comprise entre 20°C et 80°C, plus avantageusement entre 40 et 60°C.

Dans ces conditions (P^{Z1}, T^{Z1}), la composition de biomasse ne subit pas de réaction secondaire et n'est pas sujette aux problèmes de sédimentation ou de bouchage.

En effet, contrairement aux procédés de l'art antérieur, la composition de biomasse n'est pas introduite dans la zone de liquéfaction après avoir été chauffée à une température d'au moins 200°C. Ce n'est qu'une fois dans la zone Z2, que la composition de biomasse est chauffée à au moins 200°C.

Dans la zone Z2, les conditions de température et de pression permettent de réaliser la liquéfaction hydrothermale de la biomasse.

L'homme du métier saura adapter le couple pression/température pour assurer le maintien du milieu en phase liquide et en conditions sous critiques dans lesquelles l'eau se comporte à la fois comme un réactant et un solvant. La constante diélectrique de l'eau diminue de 78F.m⁻¹ dans les conditions ambiantes (25°C/10⁵ Pa) à 14 F.m⁻¹ à 350°C/20MPa (M. Uematsu et E. U. Franck, « Static Dielectric Constant of Water and Steam » Journal of Physical and Chemical Reference Data, 1980, vol. 9, n°4, pages 1291-1306). Ce changement de constante diélectrique augmente la solubilité des composés organiques hydrophobes dans l'eau, et diminue celle des sels inorganiques. En outre, le produit ionique de l'eau est environ 100 fois plus élevé en conditions sous critiques (10^{-11,2} à 250°C/5 MPa et 10⁻¹² à 350°C/25 MPa) qu'en conditions ambiantes (10⁻¹⁴ à 25°C /10⁵ Pa). La liquéfaction hydrothermale permet de tirer profit de ces propriétés.

Toutefois, dans la zone Z2, la pression P^{Z2} est avantageusement comprise entre 5.10⁶ Pa et 25.10⁶ Pa, plus avantageusement entre 10 et 20 MPa.

D'autre part, la température T^{Z2} est avantageusement comprise entre 200°C et 450°C, plus avantageusement entre 250°C et 350°C.

Selon un mode de réalisation particulier, la zone Z2 peut être chauffée avant le déplacement de la composition de biomasse dans la zone Z2, avantageusement à la température T^{Z2}.

La liquéfaction hydrothermale de la biomasse présente un temps de séjour dans la zone Z2 avantageusement compris entre 1 minute et 15 minutes, plus avantageusement entre 2 et 10 minutes. Ce temps de séjour n'inclut pas le temps nécessaire pour atteindre P^{Z2} et T^{Z2}, qui est avantageusement de l'ordre de 1 à 5 minutes.

Une fois la liquéfaction hydrothermale réalisée, les produits formés sont transférés vers la zone Z3 avant d'être évacués.

L'actionnement des pistons P1 et P2 permet de diminuer la pression alors que le passage de la zone Z2 chauffée vers la zone Z3 non chauffée permet de diminuer la température.

Aussi, la pression P^{Z3} est avantageusement comprise entre 0,1 et 1 MPa, plus avantageusement entre 0,1 et 0,5 MPa (1 MPa = 10⁶ Pa).

D'autre part, la température T^{Z3} est avantageusement comprise entre 60°C et 150°C, plus avantageusement entre 80 et 120°C.

Les produits résultant de la liquéfaction hydrothermale sont évacués de la zone Z3, avantageusement par actionnement des pistons P1 et P2 et, le cas échéant, par ouverture d'une vanne d'évacuation.

Comme déjà indiqué, ces produits peuvent être évacués à une température élevée, proche de T^{Z2} avec un refroidissement rapide.

L'invention et les avantages qui en découlent ressortiront mieux des figures et exemples suivants donnés afin d'illustrer l'invention et non de manière limitative.

### DESCRIPTION DES FIGURES

La figure 1 illustre schématiquement un dispositif selon l'invention dans un état de repos.
La figure 2 illustre schématiquement un dispositif selon l'invention dans un état de remplissage.
La figure 3 illustre schématiquement un dispositif selon l'invention dans un état de liquéfaction hydrothermale.
La figure 4 illustre schématiquement un dispositif selon l'invention dans un état d'évacuation des produits de liquéfaction hydrothermale.

### DESCRIPTION DETAILLEE DE L'INVENTION

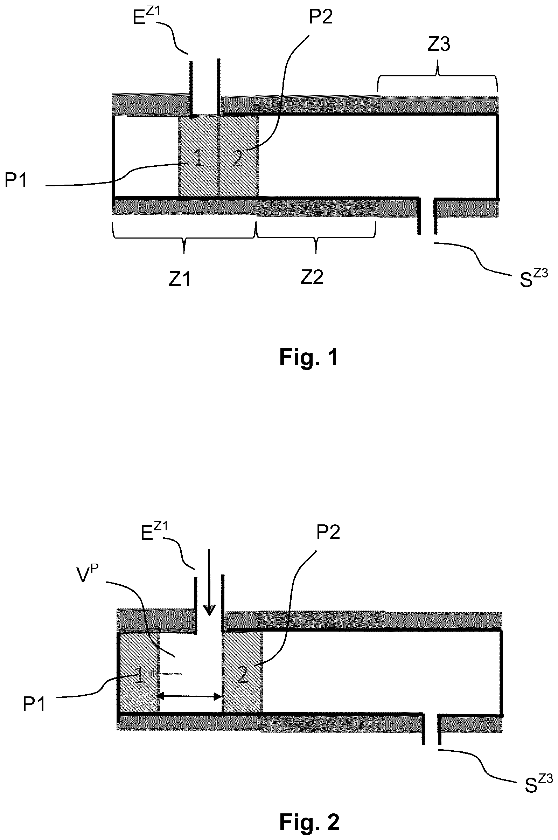

Les figures 1 à 4 représentent différents états d'un dispositif de liquéfaction hydrothermale de la biomasse selon l'invention.

Ce dispositif se présente sous la forme d'une enceinte ayant trois zones distinctes : Z1, Z2 et Z3. Les pistons P1 et P2 coulissent indépendamment l'un de l'autre. Leur actionnement permet ainsi d'amener la composition à base de biomasse de la zone Z1 vers la zone Z3. Afin de ne pas nuire à la clarté des figures 1 à 4, le moyen de chauffe externe de la zone Z2 et les moyens d'activations des pistons P1 et P2 ne sont pas représentés.

Dans un premier état de repos correspondant au dispositif avant l'introduction d'une composition à base de biomasse (figure 1), les pistons P1 et P2 sont avantageusement en contact. Le volume V^{P} est alors sensiblement nul.

De manière générale, lorsque la composition de biomasse est introduite dans la zone Z1, les pistons P1 et P2 sont écartés de manière à générer un volume V^{P} occupé par la composition de biomasse. Les pistons P1 et P2 portent également les références (1) et (2) sur les figures.

De manière avantageuse, c'est l'introduction de la composition de biomasse qui écarte les pistons P1 et P2 de manière à générer le volume V^{P} (figure 2).

Le volume V^{P} est inférieur au volume V^{E} de l'enceinte du dispositif. En outre, le volume V^{P} est généralement inférieur ou égal au volume définissant la zone Z2, c'est-à-dire la zone de liquéfaction hydrothermale.

De manière avantageuse, le volume V^{P} correspond au volume de la composition de biomasse introduite.

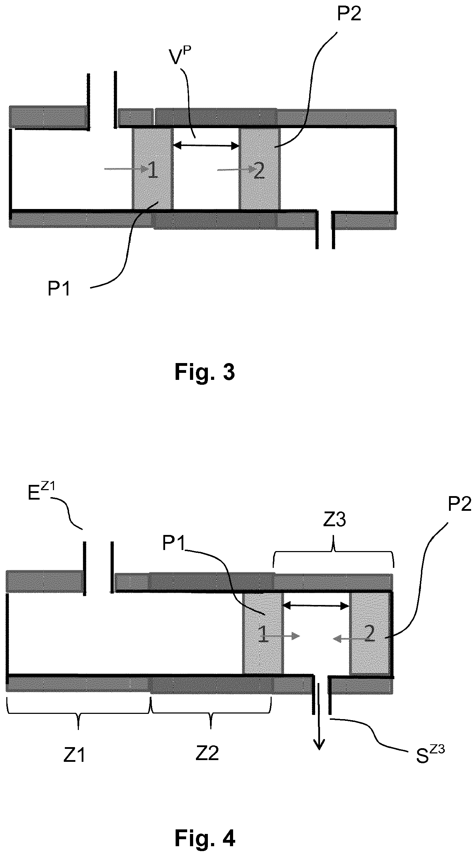

Une fois l'introduction de la biomasse réalisée, les pistons P1 et P2 sont actionnés avec des moyens d'activation de manière à transférer la biomasse dans la zone Z2 (figure 3).

Une fois dans la zone Z2, la composition à base de biomasse est simultanément chauffée à une température T^{Z2} et comprimée à une pression P^{Z2}.

A titre d'exemple, dans une enceinte ayant la forme d'un cylindre circulaire, une zone Z2 de 40 cm de longueur et de 1,4 cm de diamètre, le temps de séjour dans la zone Z2 peut être de l'ordre de 85 secondes à 300°C et à une pression comprise entre 10 MPa et 15 MPa. Ces conditions permettent de traiter 2,6 litres de composition de biomasse par heure.

Le chauffage est assuré par un moyen externe de chauffe de la zone Z2 alors que la compression est réalisée par actionnement du piston P1 et/ou du piston P2.

Une fois la composition de biomasse dans les conditions de liquéfaction hydrothermale (P^{Z2}, T^{Z2}), elle est maintenue dans la zone Z2 le temps nécessaire pour assurer la réaction.

Ensuite, les produits résultant de la liquéfaction hydrothermale de la biomasse sont transportés vers la zone d'évacuation Z3.

Pour cela, on actionne les pistons P1 et P2, l'évacuation de la biomasse hydrothermalement liquéfiée étant réalisée au moyen de la sortie S^{Z3}, par exemple au moyen d'une vanne (figure 4).

A l'issue de l'évacuation des produits résultant de la liquéfaction hydrothermale, les pistons P1 et P2 sont avantageusement en contact.

## Revendications

1. Dispositif de liquéfaction hydrothermale d'une composition à base de biomasse, comprenant :
- une enceinte définissant un volume V^{E}, comprenant trois zones successives Z1, Z2 et Z3 :
la zone Z1 étant munie d'une entrée E^{Z1} d'une composition à base de biomasse, et étant à une température T^{Z1} et à une pression P^{Z1},
la zone Z2 correspondant à une zone de réaction par liquéfaction hydrothermale de la biomasse à une température T^{Z2} et à une pression P^{Z2},
la zone Z3 étant munie d'une sortie S^{Z3} des produits issus de la réaction par liquéfaction hydrothermale de la biomasse, et étant à une température T^{Z3} et à une pression P⁷³,
- deux pistons P1 et P2, coulissant indépendamment l'un de l'autre entre les zones Z1, Z2 et Z3 de manière à amener la composition à base de biomasse de la zone Z1 vers la zone Z3, les pistons P1 et P2 étant susceptibles d'être espacés l'un de l'autre de manière à définir un volume V^{P} variable et inférieur à V^{E},
- un moyen de chauffe externe de la zone Z2,
- des moyens d'activation des pistons P1 et P2 permettant de faire varier le volume V^{P}.

2. Dispositif de liquéfaction hydrothermale selon la revendication 1, ***caractérisé* en ce que** l'enceinte est de forme cylindrique.

3. Dispositif de liquéfaction hydrothermale selon la revendication 1 ou 2, ***caractérisé* en ce que** le volume V^{E} est compris entre 50 et 150 cm³.

4. Dispositif de liquéfaction hydrothermale selon l'une des revendications 1 à 3, ***caractérisé* en ce que** l'entrée E^{Z1} est munie d'une vanne d'alimentation de la composition à base de biomasse, et **en ce que** la sortie S^{Z3} est munie d'une vanne d'évacuation des produits issus de la réaction par liquéfaction hydrothermale de la biomasse.

5. Dispositif de liquéfaction hydrothermale selon l'une des revendications 1 à 4, ***caractérisé* en ce que** le moyen de chauffe externe de la zone Z2 est un moyen de chauffe par conduction thermique.

6. Procédé de liquéfaction hydrothermale d'une composition à base de biomasse, au moyen du dispositif selon l'une des revendications 1 à 5, comprenant les étapes suivantes :
- introduction d'une composition à base de biomasse dans la zone Z1, dans le volume V^{P} au moyen de l'entrée E^{Z1},
- actionnement des pistons P1 et P2 de manière à amener la composition à base de biomasse de la zone Z1 vers la zone Z2,
- chauffage de la zone Z2 à une température T^{Z2}, et simultanément, dans la zone Z2, compression de la composition à base de biomasse en actionnant le piston P1 et/ou le piston P2, de manière à atteindre une pression P^{Z2},
- liquéfaction hydrothermale de la biomasse dans la zone Z2 à une température T^{Z2} et à une pression P^{Z2},
- actionnement des pistons P1 et P2 de manière à amener la biomasse hydrothermalement liquéfiée dans la zone Z3,
- évacuation de la biomasse hydrothermalement liquéfiée au moyen de la sortie S^{Z3}.

7. Procédé de liquéfaction hydrothermale selon la revendication 6, ***caractérisé* en ce que** :
- la pression P^{Z1} est comprise entre 0,1 et 1 MPa,
- la pression P^{Z2} est comprise entre 5.10⁶ Pa et 25.10⁶ Pa,
- la pression P^{Z3} est comprise entre 0,1 et 1 MPa,
- la température T^{Z1} est comprise entre 20°C et 80°C,
- la température T^{Z2} est comprise entre 200°C et 450°C, avantageusement entre 250°C et 350°C,
- la température T^{Z3} est comprise entre 60°C et 150°C.

8. Procédé de liquéfaction hydrothermale selon l'une des revendications 6 et 7, ***caractérisé* en ce que** la liquéfaction hydrothermale de la biomasse présente un temps de séjour dans la zone Z2 compris entre 1 minute et 15 minutes.

9. Procédé de liquéfaction hydrothermale selon l'une des revendications 6 à 8, ***caractérisé* en ce que** la composition à base de biomasse comprend entre 10 et 70% en poids de biomasse, par rapport au poids de la composition à base de biomasse.

10. Procédé de liquéfaction hydrothermale selon l'une des revendications 6 à 9, ***caractérisé* en ce que** la zone Z2 est chauffée par conduction thermique.

## Patentansprüche

1. Vorrichtung zur hydrothermalen Verflüssigung einer auf Biomasse basierenden Zusammensetzung, umfassend:
- ein Gehäuse, das ein Volumen V^{E} definiert, umfassend drei aufeinanderfolgende Zonen Z1, Z2 und Z3:
die Zone Z1 verfügt über einen Eingang E^{Z1}, für eine auf Biomasse basierende Zusammensetzung, die eine Temperatur T^{Z1} und einen Druck P^{Z1} hat,
die Zone Z2 entspricht einer Reaktionszone durch hydrothermale Verflüssigung der Biomasse bei einer Temperatur T^{Z2} und einem Druck P^{Z2},
die Zone Z3 verfügt dabei über einen Auslass S^{Z3}, für die Produkte, die Ergebnis der Reaktion durch hydrothermale Verflüssigung der Biomasse sind, die eine Temperatur T^{Z3} und einen Druck P^{Z3} haben,
- zwei Kolben P1 und P2, die sich unabhängig voneinander zwischen den Zonen Z1, Z2 und Z3 bewegen, um so die auf Biomasse basierende Zusammensetzung von der Zone Z1 in die Zone Z3 zu bringen, wobei die Kolben P1 und P2 voneinander einen solchen Abstand haben können, dass sie ein variables Volumen V^{P} definieren, das kleiner ist als V^{E}.
- eine externe Heizvorrichtung der Zone Z2
- Mittel zur Betätigung der Kolben P1 und P2, die es ermöglichen, das Volumen V^{P} zu verändern.

2. Vorrichtung zur hydrothermalen Verflüssigung nach Anspruch 1, **dadurch gekennzeichnet, dass** das Gehäuse eine zylindrische Form hat.

3. Vorrichtung zur hydrothermalen Verflüssigung nach Anspruch 1 oder 2, **dadurch gekennzeichnet, dass** das Volumen V^{E} zwischen 50 und 150 cm³.

4. Vorrichtung zur hydrothermalen Verflüssigung nach einem der Ansprüche 1 bis 3, **dadurch gekennzeichnet, dass** der Eingang E^{Z1} mit einem Zufuhrventil für die Zusammensetzung auf Biomassebasis ausgerüstet ist und dass Ausgang S^{Z3} über ein Auslassventil für die Produkte, die Ergebnis der hydrothermalen Verflüssigung der Biomassen sind, verfügt.

5. Vorrichtung zur hydrothermalen Verflüssigung nach einem der Ansprüche 1 bis 4, **dadurch gekennzeichnet, dass** die externe Heizvorrichtung der Zone Z2 eine Heizvorrichtung durch Wärmeleitung ist.

6. Verfahren zur hydrothermalen Verflüssigung einer Zusammensetzung auf Biomassebasis mittels der Vorrichtung nach einem der Ansprüche 1 bis 5: der die folgenden Schritte enthält:
- Einführen einer Zusammensetzung auf Biomassebasis in die Zone Z1, ins Volumen V^{P} über den Eingang E^{Z1},
- Betätigung der Kolben P1 und P2, so dass die Zusammensetzung auf Biomassebasis von Zone Z1 in Zone Z2 transportiert ist,
- Erwärmung der Zone Z2 auf eine Temperatur T^{Z2}, und gleichzeitig in der Zone Z2, Kompression der Zusammensetzung auf Biomassebasis durch Betätigung des Kolbens P1 und/ oder des Kolbens P2, so dass ein Druck P^{Z2} erreicht wird,
- hydrothermale Verflüssigung der Biomasse in der Zone Z2 bei einer Temperatur T^{Z2} und einem Druck P^{Z2},
- Betätigung der Kolben P1 und P2, so dass die hydrothermal verflüssigte Biomasse in Zone Z3 transportiert ist,
- Abtransport der hydrothermal verflüssigten Biomasse über den Ausgang S^{Z3}.

7. Verfahren zur hydrothermalen Verflüssigung nach Anspruch 5, **dadurch gekennzeichnet, dass**
- der Druck P^{Z1} zwischen 0,1 und 1 MPa liegt,
- der Druck P^{Z2} zwischen 5.10⁶ Pa und 25.10⁶ Pa liegt,
- der Druck P^{Z3} zwischen 0,1 und 1 MPa liegt,
- die Temperatur T^{Z1} zwischen 20°C und 80°C liegt,
- die Temperatur T^{Z2} zwischen 200°C und 450°C, am Besten zwischen 250°C und 350°C liegt,
- die Temperatur T^{Z3} zwischen 60°C und 150°C liegt.

8. Verfahren zur hydrothermalen Verflüssigung nach Anspruch 5, **dadurch gekennzeichnet, dass** die hydrothermale Verflüssigung der Biomasse eine Verweilzeit in Zone Z2 zwischen 1 Minute und 15 Minuten beträgt.

9. Verfahren zur hydrothermalen Verflüssigung nach einem der Ansprüche 6 bis 8, **dadurch gekennzeichnet, dass** die Zusammensetzung auf Biomassebasis zwischen 10 und 70 Gewichts- % der Biomasse umfasst, bezogen auf das Gewicht der Zusammensetzung auf Biomassebasis.

10. Verfahren zur hydrothermalen Verflüssigung nach einem der Ansprüche 6 bis 9, **dadurch gekennzeichnet, dass** die Zone Z2 durch Wärmeleitung erwärmt wird.

## Claims

1. Device for hydrothermal liquefaction of a composition based on biomass, incorporating:
• a chamber enclosing a volume V^{E}, incorporating three successive areas, Z1, Z2 and Z3;
• area Z1 being endowed with an entry point E^{Z1} for a biomass-based composition, and being at a temperature T^{Z1} and at a pressure P^{Z1};
• with area Z2 being an area in which a reaction takes place involving hydrothermal liquefaction of the biomass at a temperature T^{Z2} and at a pressure P^{Z2};
• with area Z3 being endowed with an outlet point S^{Z3} for products resulting from the hydrothermal liquefaction reaction of the biomass, and being at a temperature T^{Z3} and at a pressure P^{Z3};
• pistons P1 and P2 that slide independently of each other between the areas Z1, Z2 and Z3, in such a manner as to carry the biomass-based composition from the area Z1 to the area Z3, with the pistons P1 and P2 being capable of being spaced apart from each other so as to define a variable volume V^{P} that is smaller than V^{E};
• an external means of heating the area Z2;
• means of activation of the pistons P1 and P2" enabling the volume V^{P} to be varied.

2. Hydrothermal liquefaction device in accordance with claim 1, **characterized by** the fact that the chamber is cylindrical in shape.

3. Hydrothermal liquefaction device in accordance with claim 1 or claim 2, ***characterized* by** the fact that the volume V^{E} is between 50 and 150 cm³.

4. Hydrothermal liquefaction device in accordance with one of claims 1 to 3, ***characterized* by** the fact that the entry point E^{Z1} is endowed with a valve that supplies the biomass-based composition, and by the fact that the outlet point S^{Z3} is endowed with a valve that evacuates products resulting from the hydrothermal liquefaction reaction of the biomass.

5. Hydrothermal liquefaction device in accordance with one of claims 1 to 4, ***characterized* by** the fact that the external means of heating of the area Z2 is a thermal conduction heating system.

6. Process of hydrothermal liquefaction of a biomass-based composition, by means of the device in accordance with one of claims 1 to 5, incorporating the following steps:
• introduction of a biomass-based composition into the area Z1, within the volume V^{P}, via the entry point E^{Z1};
• activation of the pistons P1 and P2 so as to carry the biomass-based composition from the area Z1 to the area Z2;
• heating of the area Z2 to a temperature T^{Z2} and, simultaneously in area Z2, compression of the biomass-based composition by activating the piston P1 and/or the piston P2, so as to attain a pressure P^{Z2};
• hydrothermal liquefaction of the biomass in the area Z2, at a temperature T^{Z2} and at a pressure P^{Z2};
• activation of the pistons P1 and P2 so as to carry the hydrothermally-liquefied biomass to the area Z3;
• evacuation of the hydrothermally-liquefied biomass via the outlet point S^{Z3}.

7. Hydrothermal liquefaction process in accordance with claim 6, **characterized by** the fact that:
• the pressure P^{Z1} is between 0.1 and 1 MPa;
• the pressure P^{Z2} is between 5.10⁶ Pa and 25.10⁶ Pa;
• the pressure P^{Z3} is between 0.1 and 1 MPa;
• the temperature T^{Z1} is between 20°C and 450°C, and advantageously between 250°C and 350°C;
• the temperature T^{Z3} is between 60°C and 150°C.

8. Hydrothermal liquefaction process in accordance with one of claims 6 or 7, ***characterized* by** the fact that the hydrothermal liquefaction of the biomass involves a sojourn time in area Z2 of between 1 minute and 15 minutes.

9. Hydrothermal liquefaction process in accordance with one of claims 6 to 8, ***characterized* by** the fact that the biomass-based composition includes between 10 and 70% weight of biomass, in relation to the weight of the biomass-based composition.

10. Hydrothermal liquefaction process in accordance with one of claims 6 to 9, ***characterized* by** the fact that the area Z2 is heated by thermal conduction.
